Europäisches Patentamt

European Patent Office

Office européen des brevets

(19)

(11) Veröffentlichungsnummer : **0 126 285**
**B1**

(12) **EUROPÄISCHE PATENTSCHRIFT**

(45) Veröffentlichungstag der Patentschrift :
30.12.86

(21) Anmeldenummer : 84104188.2

(22) Anmeldetag : 13.04.84

(51) Int. Cl.⁴ : **B 27 C   1/10**

(54) **Handhobelgerät.**

(30) Priorität : 24.05.83 DE 3318844
13.12.83 DE 3344962

(43) Veröffentlichungstag der Anmeldung :
28.11.84 Patentblatt 84/48

(45) Bekanntmachung des Hinweises auf die Patenterteilung : 30.12.86 Patentblatt 86/52

(84) Benannte Vertragsstaaten :
AT BE CH DE FR GB IT LI LU NL SE

(56) Entgegenhaltungen :
CH-A-   297 501
DE-A- 2 018 575
DE-A- 3 109 361
DE-C-   167 040
FR-A- 1 059 785
US-A-   917 915
US-A- 1 021 631
US-A- 1 249 674
US-A- 1 723 951
US-A- 1 900 336
US-A- 1 911 179
US-A- 2 344 897

(73) Patentinhaber : Eugen Lutz + Co.
Chemin de la Communance 26
CH-2800 Delémont (CH)
DE
Black & Decker Overseas AG
Staedtle 36
FL-9490 Vaduz (LI)
BE CH FR GB IT LI LU NL SE AT

(72) Erfinder : Bergler, Otto
Jahnstrasse 18/1
D-7130 Mühlacker-Lomersheim (DE)

(74) Vertreter : Wilhelm, Hans-Herbert, Dr.-Ing. et al
Wilhelm & Dauster Patentanwälte Hospitalstrasse 8
D-7000 Stuttgart 1 (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Handhobelgerät mit einer elektromotorisch getriebenen Antriebswelle für einen mit Messern, insbesondere Profilmessern bestückten Hobelkopf o. dgl., der in einem im Gehäuse vorgesehenen und nach unten offenen zylindrischen Hobelraum umläuft, dessen Öffnung quer zur Vorschubrichtung durch die hintere Kante einer in der Höhe verstellbaren Zuführplatte bzw. durch die Vorderkante der Abgabeplatte begrenzt ist und dessen Achse in einer bestimmten Lage zu der Hobelsohle der Abgabeplatte angeordnet ist.

Bekannte Handhobelgeräte dieser Art sind bisher ausschließlich für eine flächige Bearbeitung geeignet. Die Hobelsohle des Abgabetisches bzw. der Abgabeplatte ist bei den bekannten Bauarten tangential zum Flugkreis des Hobelmessers ausgerichtet, so daß im wesentlichen nur Flächenbearbeitungen bzw. Einpaßarbeiten an Fensterrahmen oder das Abhobeln von Türen o. dgl. möglich sind. Dies gilt im wesentlichen auch für Sonderbauarten von Hobeln, wie beispielsweise den Schropphobel, dessen Messer zwar eine gewisse Profilierung aufweisen, bei dem aber ebenfalls die Hobelsohle im wesentlichen tangential zum Flugkreis der Profilmesser verläuft, wobei lediglich einzelne Stellen des Profilmessers etwa 1 mm tief in die zu bearbeitende Fläche eingreifen, um so einen rustikalen Charakter der Oberfläche zu erreichen. Auch bei dem sogenannten Faßhobel fluchtet die hintere Hobelsohle mit dem Flugkreis des Hobelmessers, wobei in diesem Fall allerdings Zuführtisch und Abgabetisch als gewölbte und in ihrem Wölbungsradius einstellbare Führungsflächen ausgebildet sind.

Bei den bekannten Hobelgeräten ist der zylindrische Hobelraum so angeordnet und ausgelegt, daß er in etwa dem Durchmesser des Hobelkopfes mit den nur geringfügig vorstehenden Messerschneiden entspricht, wobei die Achse des Hobelraumes so liegt, daß dessen untere Begrenzung in einen schmalen Spalt zwischen der spanbrechenden Hinterkante des Zuführtisches und der Vorderkante des Abgabetisches hereinreicht, dessen Hobelsohle tangential zu dem Flugkreisdurchmesser des Hobelmessers verläuft. Die schmale schlitzartige Öffnung ist aus Sicherheitsgründen vorgesehen, damit die Hände einer Bedienungsperson nicht unabsichtlich von dem rotierenden Hobelkopf und dessen Messern erfaßt werden können. Wegen dieser Auslegung üblicher Handhobelgeräte kann mit ihnen eine Profilierung nicht vorgenommen werden, weil keine Möglichkeit besteht, einen größeren Messerumfang aus der Öffnung nach unten heraustreten zu lassen. Für Profilierarbeiten von Leisten oder von Balkenoberflächen o. dgl. werden stationäre Fräsmaschinen eingesetzt, die aufwendig sind. Es sind zwar auch Hobelgeräte zur Herstellung von Profilen bekannt (US-PS 1 206 461); hier kann die Geradführung aber nur durch gesonderte Seitenanschläge in Form von Rollen o. dgl. erreicht werden. Eine Führung in dem erzeugten Profil selbst ist nicht möglich und auch nicht vorgesehen.

Der Erfindung liegt die Aufgabe zugrunde, ein Handhobelgerät der eingangs genannten Art so auszugestalten, daß auch Profilierarbeiten möglich sind, so daß Leistenprofile auch von Heimwerkern oder im mobilen Einsatz auf Baustellen o. dgl. angefertigt werden können.

Das Handhobelgerät nach der Erfindung ist im Patentanspruch 1 definiert. Ein Handhobelgerät nach dem Gattungsbegriff dieses Anspruch 1 ist z. B. aus CH-A-297 501 bekannt.

Durch diese erfindungsgemäße Ausgestaltung wird es nunmehr möglich, Profilmesser am Hobelkopf vorzusehen, deren Profil eine bestimmte und vorher festgelegte Höhe haben kann, ohne daß der Hobelraum und die Austrittsöffnung die Anordnung solcher Messer verhindern würde. Vorteilhaft ist es, zur Erzielung eines einwandfreien und störungsfreien Hobelvorganges, wenn die Zuführplatte und die Abgabeplatte in Vorschubrichtung verstellbar sind, so daß sie an das herzustellende Profil anpaßbar sind. Dabei kann die Zuführplatte im Bereich der spanbrechenden Kante und die Abgabeplatte im Bereich ihrer Vorderkante je mit einem auswechselbaren Kantenteil versehen werden, dessen Kontur an den Flugkreis des auszuführenden Profiles angepaßt ist. Werden die auswechselbaren Kantenteile aus einem vom Hobelmesser zerspanbaren Material hergestellt, dann wird es möglich, durch den rotierenden Hobelkopf mit den Profilmessern selbst diese Kantenteile an das Profil anzupassen, so daß eine optimale Spanbrechwirkung einerseits und andererseits eine sichere Führung beim Hobelvorgang erreicht werden kann. Zur Verstellung von Abgabeplatte und Zuführplatte ist es vorteilhaft, wenn diese formschlüssig am Gehäuse des Handhobels geführt und über Verstellspindeln verschiebbar sind, die jeweils von vorne bzw. von hinten bedienbar sind, so daß sich eine feinfühlige und einfache Einstellung erreichen läßt.

Um bei dieser Ausführungsform eines Handhobels, bei dem zunächst die Hobelsohle gegenüber dem äußersten Flugkreisdurchmesser des Hobelkopfes zurückversetzt ist, die notwendige Führung zu erreichen, ist es vorteilhaft, wenn die Abgabeplatte mit einer Einrichtung mindestens zur teilweisen Anpassung an die Tiefe des erzeugten Profils versehen ist. Diese Einrichtung kann aus Vertiefungen an der Hobelsohle bestehen, in die mindestens an Teile der Profiltiefe angepaßte Formstücke einsetzbar sind. So können beispielsweise die Vertiefungen als in Vorschubrichtung verlaufende Längsnuten mit Schwalbenschwanz- oder T-Profil ausgebildet sein, in die Abstützprofile einschiebbar sind, die in einer einfachen Ausführung als Leisten ausgebildet sein können, deren Höhe einer Profiltiefe entspricht. Bei der Herstellung eines Vollprofiles, d. h. eines Profiles, bei dem kein Teil des fertigen Profiles in der Höhe verläuft, in der in etwa auch der Zuführtisch und das Ausgangsmaterial angeordnet ist, können mindestens zwei solcher Leisten vorgesehen werden. Bei einer Teilprofilierung genügt unter Umständen eine Leiste, während die Hobelsohle selbst auf einem anderen Teil des fertigen Profils geführt werden kann.

Natürlich ist es auch möglich, die Abstützprofile als quer zur Vorschubrichtung verlaufende Teilstücke oder auch als auswechselbare Platten, die der Länge der Hobelsohle entsprechen und mit der Negativkontur des herzustellenden Profils versehen sind, auszubilden und in die Längsnuten einzuklipsen. Es ist auch möglich, Verstellstifte vorzusehen, die senkrecht von der Hobelsohle abstehen und in ihrer Länge beispielsweise in der Form von Gewindestiften veränderbar sind, so daß auch auf diese Weise die gewünschte Führung an der Hobelsohle erreicht wird.

Es hat sich gezeigt, daß Profilvertiefungen längs gerader Linien nicht immer mit einem Zerspanungsvorgang hergestellt werden können, weil die Leistungsfähigkeit des Handhobelgerätes nur eine Zerspannung bis zu einer gewissen Tiefe zuläßt. Zu große Schnittiefen würden zu Ungenauigkeiten oder auch zu unerwünschten Schwingungskonturen in dem fertiggestellten Profil führen.

Vorteilhaft ist es daher, wenn auch die Zuführplatte so ausgebildet ist, daß ihre Hobelsohle an die vom Hobelkopf erzeugbaren Profiltiefen anpaßbar ist. Das kann in sehr einfacher Weise dadurch geschehen, daß auch an der Hobelsohle der Zuführplatte Profilleisten o. dgl. eingesetzt werden. Einfacher und wirkungsvoller ist es, wenn auch an der Hobelsohle der Zuführplatte Profilplatten angebracht werden, wie das auch für die Hobelsohle der Abgabeplatte schon vorgesehen war. Die einfachste und zweckmäßigste Ausführung allerdings besteht darin, wenn die Hobelsohle der Zuführplatte und ggf. auch die Hobelsohle der Abgabeplatte als Ganzes vom Gehäuse abnehmbar ausgestaltet werden und wenn jeweils die an einen bestimmten Profilhobelkopf angepaßten Hobelsohlenplatten, die entsprechend profiliert sind, über Rastverbindungen formschlüssig am Gehäuse angebracht werden. Diese Ausgestaltung erlaubt ein schnelles und einfaches Auswechseln und Anpassen der Hobelsohlen an den gewünschten Einsatzzweck. Vorteilhaft ist es auch, wenn der Vorderteil des Gehäuses mit der vor dem Hobelkopf liegenden Zuführplatte hochschwenkbar ausgebildet ist, so daß die vordere Hobelsohle leicht zugängig wird und auch leicht ausgewechselt werden kann. Auch bei einem stationären Einsatz eines solchen Hobelgerätes kann daher mindestens die vordere Hobelsohle leicht und einfach ausgewechselt werden. Um ein Hochklappen aus der Betriebsstellung zu verhindern, kann das hochklappbare Gehäusevorderteil durch eine Rastverbindung am Gehäuse gesichert sein.

Die Erfindung ist in den Zeichnungen anhand von Ausführungsbeispielen dargestellt und wird im folgenden erläutert. Es zeigen :

Figur 1   eine schematische Seitenansicht eines erfindungsgemäß ausgestalteten Handhobels,

Figur 2   den Teilschnitt längs der Linie II der Fig. 1,

Figur 3   den Teilschnitt längs der Linie III der Fig. 1,

Figur 4   einen Teilschnitt ähnlich Fig. 2 durch den Abgabetisch des Handhobels mit der speziell ausgestalteten Hobelsohle, in die Führungsleisten als Abstützprofile auf dem fertiggestellten Profil eingesetzt sind,

Figuren 5a und 5b   Draufsichten auf die eingesetzten Leistenprofile,

Figur 6   einen Schnitt ähnlich Fig. 4, jedoch bei einer anders ausgebildeten Hobelsohle,

Figur 7   die Hobelsohle der Fig. 4 in der gleichen Schnittdarstellung, jedoch mit eingesetzten profilierten Teilstücken als Abstützeinrichtungen,

Figur 8   die Draufsicht auf das eingesetzte Teilstück der Fig. 7,

Figur 9   den Schnitt durch die Hobelsohle wie Fig. 4, jedoch mit seitlich angesetzten Führungsleisten als Abstützprofile,

Figur 10   den Schnitt ähnlich Fig. 4, jedoch mit mindestens einem seitlich angesetzten Seitenanschlag,

Figur 11   eine Teilansicht des Handhobels der Fig. 1 im Bereich der Hobelsohle mit einer angesetzten Profilplatte als Abstützung,

Figur 12   einen Teilschnitt durch die Profilplatte der Fig. 11, geschnitten längs der Linie XII,

Figur 13   eine Draufsicht auf die profilierte Platte der Fig. 11, die in die Hobelsohle eingeklipst ist,

Figur 14   eine schematische Seitenansicht einer anderen Ausführung eines Handhobelgerätes mit auswechselbaren Hobelsohlen vor und hinter dem Hobelkopf,

Figur 15   die Draufsicht auf das Handhobelgerät der Fig. 14 und

Figur 16   die Seitenansicht des Hobelgerätes der Fig. 14, jedoch mit nach oben geschwenktem Gehäusevorderteil.

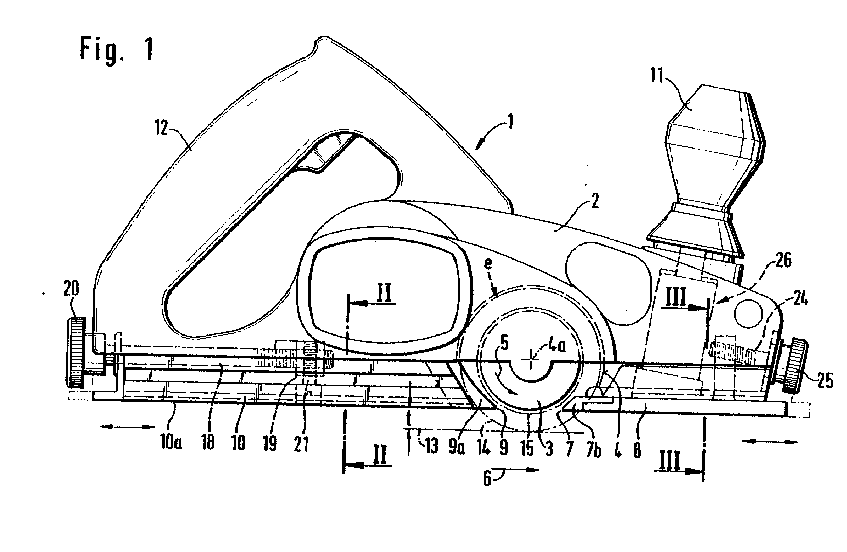

In der Fig. 1 ist ein Handhobel 1 gezeigt, der in einem Gehäuse 2 mit einem nicht näher gezeigten Elektromotor als Antrieb für einen rotierenden Hobelkopf 3 ausgerüstet ist, der in einem zylindrischen Hobelraum 4 innerhalb des Gehäuses 2 in Richtung des Pfeiles 5 rotierend antreibbar ist. Der zylindrische Hobelraum 4 wird quer zu der Vorschubrichtung 6, in der der Handhobel 1 relativ zu einem nicht gezeigten Werkstück verschoben wird, durch die hintere Kante 7 einer Zuführplatte 8 und durch die vordere Kante 9 einer Abgabeplatte 10 begrenzt, die beim gezeigten Ausführungsbeispiel Teile von auswechselbaren Kantenteilen 7b bzw. 9a sind, welche in nicht näher gezeigter Weise jeweils auf die Zuführplatte 8 bzw. auf die Abgabeplatte 10 formschlüssig aufgesteckt sind. Zwischen den Kanten 7 und 8 entsteht so eine Öffnung, durch die der Hobelkopf 3 bzw. die in ihn in bekannter Weise eingesetzten Messer zur Bearbeitung nach unten heraustreten können. Bei der Bearbeitung wird der Handhobel 1 in an sich bekannter Weise von Hand an dem Führungsknopf 11 bzw. am Handgriff 12 erfaßt und beispielsweise über das zu bearbeitende Werkstück in Richtung des Pfeiles 6 geschoben. Selbstverständlich ist es auch möglich, den Handhobel 1 mit seiner Unterseite nach oben fest anzuordnen, so daß dann Werkstücke über den Hobel entgegengesetzt zur Richtung 6 geschoben werden können.

Beim gezeigten Ausführungsbeispiel ist der zylindrische Hobelraum 4, dessen Achse 4a in einer bestimmten Lage zum Abgabetisch 10 bzw. zu dessen Hobelsohle 10a angeordnet ist, in seinem Durchmesser so groß ausgelegt, daß eine an seinen Durchmesser im Bereich der Öffnung zwischen den Kanten 7 und 9 gelegte Tangente 13, die parallel zu der Hobelsohle 10a verläuft, um den Abstand t über die Hobelsohle 10a nach unten vorsteht. Der Abstand t entspricht dabei der maximal mit dem Handhobel 1 erzielbaren Profiltiefe, welche sich aus dem Flugkreisdurchmesser 14 ergibt, den in den Hobelkopf 3 eingesetzte Profilmesser beschreiben. Dieser Flugkreisdurchmesser 14 bleibt stets etwas kleiner als der Durchmesser des Hobelraumes 4. Zum besseren Verständnis ist auch ein Flugkreisdurchmesser 15 des Hobelkopfes 3 eingezeichnet, der dem Flugkreis entspricht, den handelsübliche Hobelmesser einnehmen würden. Der Handhobel 1 der Fig. 1 kann, in der dargestellten Ausgangslage, auch für übliche Flächenbearbeitungen eingesetzt werden. In diesem Fall wird der Hobelkopf 3 mit Messern mit einem Flugkreisdurchmesser 15 versehen. Sowohl die Zuführplatte 8 als auch die Abgabeplatte 10 nehmen dann die in Fig. 1 gezeichnete Lage ein, in der die Abgabeplatte 10 bzw. dessen Hobelsohle 10a tangential zum Flugkreisdurchmesser 15 verläuft und mit Hilfe der Zuführplatte 8 die Spantiefe eingestellt wird. Zu diesem Zweck ist die Zuführplatte 8 in an sich bekannter Weise über den verdrehbaren Handknopf 11 in seiner Höhe dadurch einstellbar, daß mit diesem Knopf 11 eine Schraubspindel zur Höhenverstellung der Zuführplatte 8 bewegt wird.

Um außer den üblichen Flächenbearbeitungen durch Hobeln auch eine Profilierung vornehmen zu können, ist der neue Handhobel 1 mit verschiedenen Einrichtungen versehen, die außer dem größeren Durchmesser des Hobelraumes e gegenüber bekannten Handhobeln vorgesehen sind.

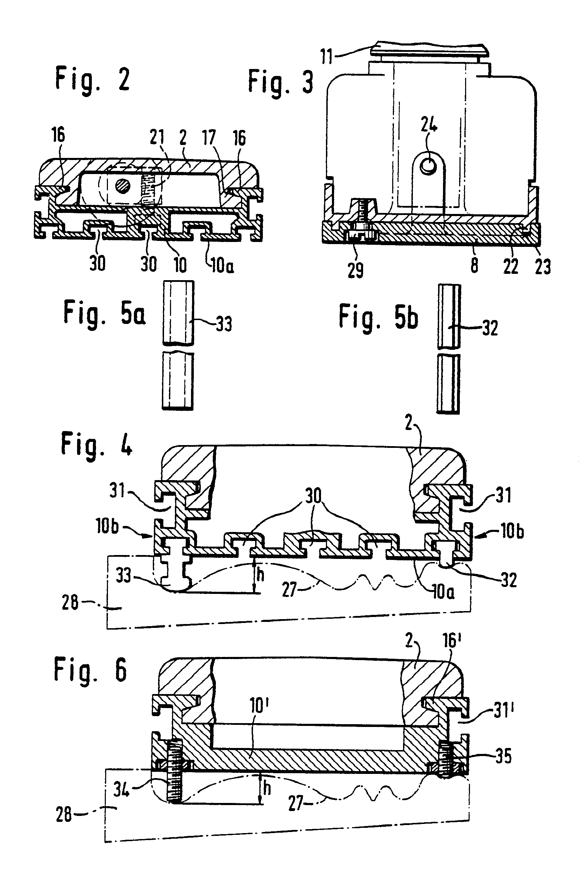

So ist zum einen sowohl die Zuführplatte 8 als auch die Abgabeplatte 10 in der Vorschubrichtung und in Richtung zum Hobelkopf 3 hin längsverstellbar an dem Gehäuse 2 geführt. Das wird dadurch erreicht, daß die Abgabeplatte 10 profiliert ausgebildet ist, wie das aus Fig. 2 hervorgeht, und mit beidseitig des Gehäuses 2 nach innen greifenden Führungsschienen 16 versehen ist, die formschlüssig in entsprechende Nuten 17 des entsprechenden Gehäuseteiles eingreifen. Diese so längsverschiebbar angeordnete Abgabetischplatte kann über eine Schraubspindel 18 und eine Mutter 19 über ein Verstellrad 20 in Richtung des Pfeiles 6 oder in der Gegenrichtung dazu verschoben werden. Die Schraubspindel 18 und das Verstellrad 20 sind zu diesem Zweck in an sich bekannter Weise axial fest, aber verdrehbar am Gehäuse 2 gehalten, so daß sich die Mutter 19 bei einer Drehung der Schraubspindel 18 auf dieser verschiebt. Die Mutter 19 steht über ein Verbindungsstück 21 mit der verschiebbaren Abgabeplatte in Verbindung, so daß durch die Verdrehung des Handrades 20 dieser in Richtung zum Hobelkopf 3 verstellt werden kann. Ähnlich ist auch die Verstelleinrichtung für die Zuführplatte 8 ausgebildet. Wie aus Fig. 3 hervorgeht, ist die Zuführplatte 8 ebenfalls formschlüssig durch Vorsprünge 22 und Nuten 23 an der Unterseite des vorderen Gehäuseteils 2 längsverschiebbar geführt. Auch hier dient eine Schraubspindel 24 und ein Verstellrad 25 zur Längsverstellung, wobei hier in nicht näher dargestellter Weise bei einer Verschiebung der Zuführplatte 8 auch für eine Verschiebbarkeit des Verstellgewindes gegenüber der Spindel 24 gesorgt sein muß, die nicht parallel zu der Verschieberichtung der Zuführplatte 8 verläuft. Eine solche Anordnung muß aber an der Zuführplatte 8 schon deshalb vorgesehen sein, weil dieser selbst über die Höhenverstelleinrichtung, die global mit 26 bezeichnet ist, in der Höhe verstellbar sein muß. Durch die Längsverschiebbarkeit von Zuführplatte 8 und Abgabeplatte 10 kann die spanbrechende Kante 7 des Kantenteiles 7b einerseits und auch die hintere Führungskante 9 des Kantenteils 9a, welche die Durchtrittsöffnung für die Messer bestimmen, an das herzustellende Profil bzw. an das Profil der verwendeten Profilmesser angepaßt werden. Vorteilhaft ist es dabei, wenn diese Kantenteile 7b bzw. 9a aus einem durch die Profilmesser selbst zerspanbaren Material bestehen. Sie können dann vor der Bearbeitung in Längsrichtung dem rotierenden Hobelkopf 3 zugestellt werden, so daß die Profilmesser diese Kantenteile 7b bzw. 9a das ihnen eigene Profil einschneiden, so daß bei der anschließenden Bearbeitung eine exakte saubere Führung sowie eine saubere Bearbeitung wegen der exakt im gleichen Abstand zu den Schneiden der Profilmesser verlaufenden spanbrechenden Kante 7 erreicht wird. Beispielsweise aus der Fig. 4 läßt sich entnehmen, daß die Kontur 27 des herzustellenden Werkstückes 28 einen profilierten Verlauf hat, der dem Negativ des Profilverlaufes der verwendeten Profilmesser entspricht. Durch die erwähnte Zustellung der Kanten 7 und 9 zum rotierenden Hobelkopf 3 erhalten somit die Kanten 7 bzw. 9 im Fall der Herstellung des Profiles der Fig. 4 ebenfalls die Kontur 27, die dem Negativ der verwendeten Profilmesser entspricht. Zu erwähnen ist noch, daß die Zuführplatte 8 in seiner Relativlage zum Hobelkopf 3 nach der Einstellung durch das Handrad 25 dadurch fixiert werden kann, daß eine Klemmschraube 29 fest angezogen wird, die von unten her zugängig ist.

Um bei einer solchen Profilierung eines Werkstückes, beispielsweise des leistenförmigen Werkstückes 28 der Fig. 4 für eine für den Hobelvorgang wichtige Auflage der Abgabeplatte 10 auf dem Werkstück zu sorgen, können verschiedene Vorkehrungen getroffen werden. Beim dargestellten Ausführungsbeispiel ist zunächst die Abgabeplatte 10, wie auch schon aus Fig. 2 ersichtlich, als eine an der Hobelsohle 10a, aber auch an den beiden Seitenkanten 10b mit Nuten 30 bzw. 31 versehene Profilplatte ausgebildet, in die formschlüssig beispielsweise die beiden Leisten 32 und 33 eingeschoben werden können, deren Höhe und Form an die Kontur 27 des herzustellenden Profiles angepaßt sind. Obwohl daher die Hobelsohle 10a gegenüber dem Flugkreisdurchmesser 14 bzw. gegenüber der am Durchmesser des Hobelraumes 4 anliegenden Tangente zurückliegt, kann auf diese Weise doch die notwendige Auflage des Handhobels 1 auf dem Werkstück sichergestellt werden. Je nach der herzustellenden Prolifart ist es natürlich auch möglich, beispielsweise auf das Einsetzen der Leiste 32 zu verzichten, wenn an dieser Stelle das Profil keine Tiefe h aufweist, so daß die Hobelsohle 10a unmittelbar auf dem an dieser Stelle nicht profilierten Werkstück 28 aufliegen kann. An der Stelle der größten Profiltiefe h ist beim Ausführungsbeispiel der Fig. 4 die Leiste 33 vorgesehen. Es gilt grundsätzlich die Bedingung, daß h kleiner oder gleich der maximal herzustellenden Profiltiefe t ist.

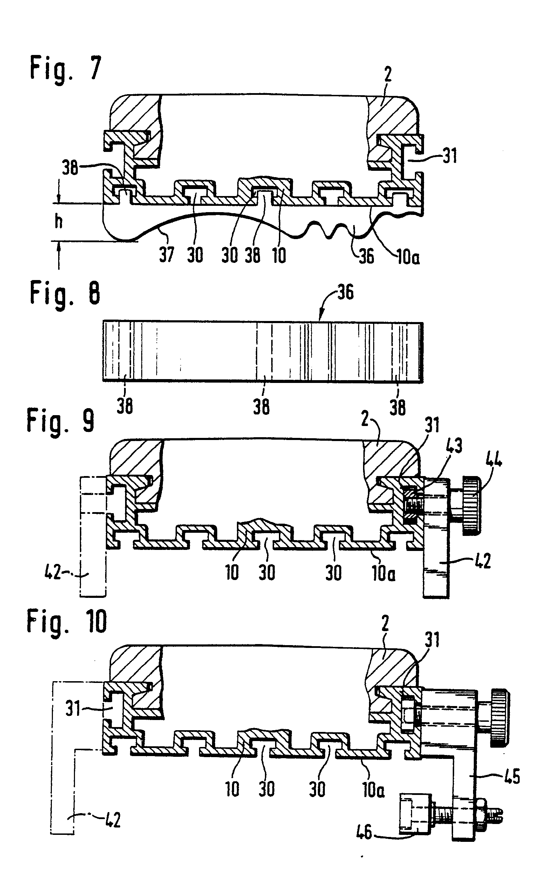

Auf andere Möglichkeiten, mit Hilfe der als Profilplatte ausgebildeten Ablagetischanordnung der Fig. 4 die Führung zu bewerkstelligen, wird anhand der Fig. 7 bis 13 noch eingegangen werden.

Fig. 6 zeigt zunächst jedoch noch eine ganz andere Möglichkeit, die Führung zu erreichen. In der Fig. 6 ist der Abgabetisch 10' nicht als Profilplatte wie in den Fig. 4 und 7 bis 13 ausgebildet, sondern als eine durchgehende glatte Platte, die zwar ebenfalls mit den Führungsschienen 16' versehen ist und mit seitlichen Nuten 31', so daß sie ebenfalls längsverschiebbar ist. Anstelle der Nuten 30 sind hier jedoch dem Abgabetisch 10' unmittelbar Verstellstifte 34 und 35 in Form von Stiftschrauben zugeordnet, die in einem entsprechenden Gewinde an der Unterseite der Abgabetischplatte 10' geführt sind. Diese Verstellstifte 34 und 35 lassen sich wieder, so wie auch die Leisten 32 und 33 an die Tiefe h der jeweiligen Profilkontur 27 anpassen, so daß beim Einsatz von mindestens zwei in der Längsrichtung der Abgabetischplatte 10' verteilt angeordneten Stiften 34 bzw. 35 ebenfalls eine Führung erreicht werden kann. Natürlich können diese Stifte auf ihrer Auflageseite auch noch mit reibungsarmem Material oder mit Gleitkufen versehen sein. Maßgebend ist lediglich, daß in der Höhe verstellbare und daher an verschiedene Profilarten anpaßbare Verstellstifte 34 und 35 vorgesehen werden.

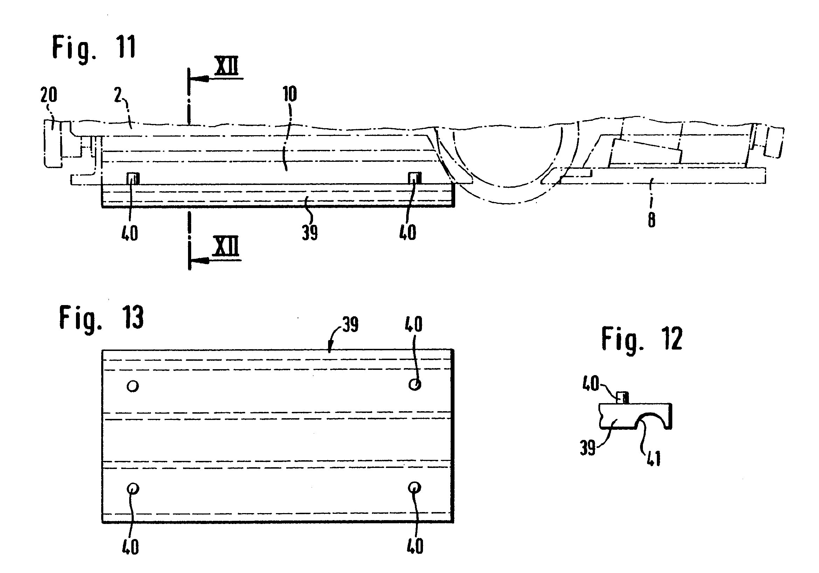

Die Fig. 7 und 8 zeigen eine weitere Möglichkeit, die Höhenanpassung der Hobelsohle 10a an das jeweilige Profil zu bewerkstelligen. In den Fig. 7 und 8 sind an die Abgabetischplatte 10 profilierte Teilstücke 36 angesetzt, die quer zur Vorschubrichtung mit einem Profil 37 versehen sind, das der Kontur 27 des in der Fig. 4 gezeigten Werkstückes 28 angepaßt ist. Durch das Einsetzen von zwei solchen Teilstücken verteilt auf der Länge der Abgabetischplatte 10 wird die gewünschte Führung auf dem hergestellten Profil erreicht. Wie Fig. 7 zu entnehmen ist, sind die Teilstücke 36 dabei mit Längsrippen 38 versehen, die in die Nuten 30 der Abgabetischplatte 10 hereingeklipst sind, so daß die Teilstücke 36 sicher festgehalten sind. Anstelle der Teilstücke 36 kann natürlich an die Hobelsohle 10a auch eine entsprechend profilierte, aber durchgehende Profilplatte 39 angesetzt werden, die mit Noppen 40 in die Längsnuten 30 eingeklipst wird, wie das in den Fig. 11 und 13 gezeigt ist. Diese Platte 39 kann beispielsweise das Profil 37 der Teilstücke 36 aufweisen. Sie kann aber auch, wie anhand Fig. 12 angedeutet ist, mit einer ganzanderen Profilkontur 41 versehen sein, die sich je nach dem herzustellenden Profil richtet.

Die Fig. 9 zeigt nun einmal eine Möglichkeit, die von den bisher gezeigten Möglichkeiten der Abstützung an dem hergestellten Profil abweicht. Bei Fig. 9 nämlich sind feste Seitenanschläge 42 in Form von Leisten o. dgl. mindestens einer Seite dadurch zugeordnet, daß in die Seitennuten 31 Gleitsteine 43 eingesetzt sind, die über eine Rändelschraube 44 fest in den Nuten 31 verklemmt werden. Die Unterkante der Leiste 42 kann nun als Auflage auf einer Fläche verwendet werden, die entweder Teil des hergestellten Profiles ist oder parallel zu den Profilflächen verläuft. Auf der anderen Seite kann die Auflage ebenfalls durch eine Leiste 42 erfolgen. Dies ist jedoch dann nicht notwendig, wenn die Hobelsohle 10a zumindestens in einem Teilbereich als Führungsfläche dienen kann.

Fig. 10 zeigt schließlich noch die Möglichkeit, daß ein verstellbarer Seitenanschlag 45 an der Nut 31 angeklemmt werden kann, der mit einem zusätzlichen Anschlagstück 46 versehen ist, das quer zur Vorschubrichtung verstellbar ist. Auch hiermit lassen sich die Führungsmöglichkeiten für den neuen Handhobel 1 verbessern.

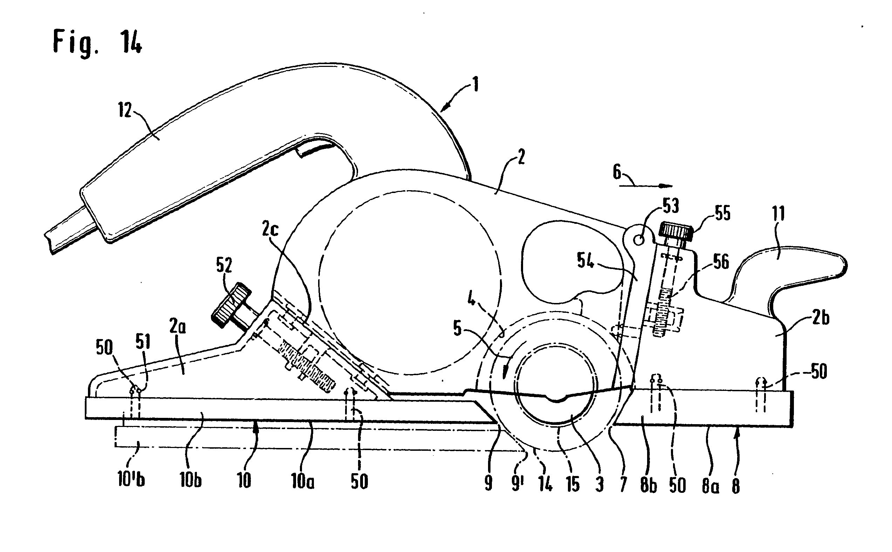

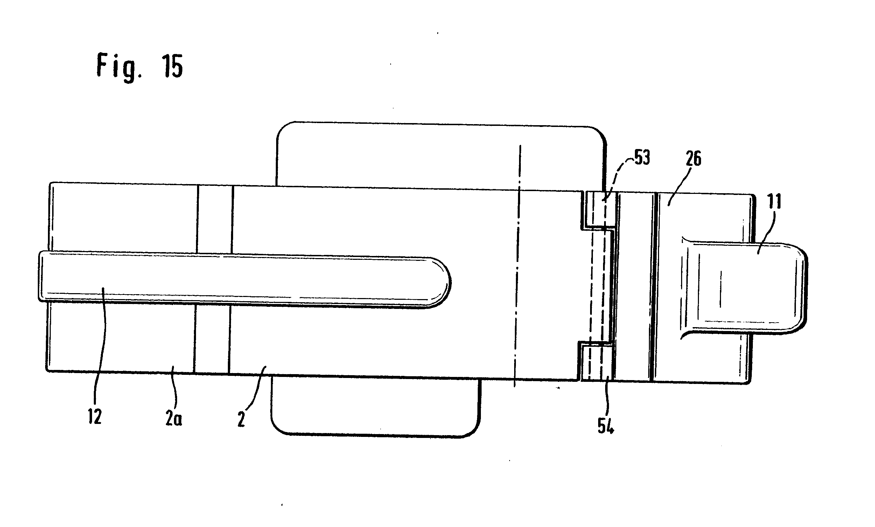

In den Fig. 14 bis 16 sind die Teile des Handhobels 1 mit den gleichen Bezugszeichen wie in den Fig. 1 bis 13 bezeichnet. Der bei der Bearbeitung am Handgriff 12 und an dem Führungsknopf 11 von Hand geführte Hobel kann jeweils mit der Hobelsohle 10a bzw. 8a auf einem Werkstück geführt werden. Er hinterläßt eine quer zur Vorschubrichtung 6 verlaufende Kontur in dem nicht gezeigten Werkstück, die im Querschnitt dem Negativ des durch die Flugkreise 14 und 15 bestimmten Profiles entspricht. Um eine einwandfreie Geradführung des Handhobels 1 bei diesem Bearbeitungsvorgang zu ermöglichen, ist die Hobelsohle 10a entsprechend dem Profil des Hobelkopfes profiliert. Im gezeigten Ausführungsbeispiel ist die gesamte, die Hobelsohle 10a aufweisende Platte 10b von dem hinteren Gehäuseteil 2a abnehmbar ausgebildet. Sie sitzt am Gehäuseteil 2a über Raststifte 50, von denen beispielsweise vier gleichmäßig über die Fläche der Platte 10b verteilt angeordnet sind. Diese Stifte 15 greifen in Öffnungen im Gehäuseteil 2a ein, in denen ebenfalls in Nuten Federringe sitzen, welche in die Nuten der Raststifte 15 einrasten. Die so an dem Gehäuseteil 2a befestigte Platte 10b kann dann entlang der schrägen Ebene 2c bei Betätigung der Handrändelmutter 52 verschoben werden, so daß sie bis in die Stellung 10b' bewegbar ist, in der ihre Vorderkante die Stellung 9' einnimmt, in der sie ebenfalls so nahe als möglich an dem rotierenden Hobelkopf 3 liegt.

Eine dem Profil des Hobelkopfes 3 — im Ausführungsbeispiel mit den Flugkreisdurchmessern 14 und 15 — angepaßte Hobelsohle 8a weist auch die an der Zuführplatte 8 angebrachte Platte 8b auf, die ebenfalls über Raststifte 50 an dem vorderen Gehäuseteil 2b angebracht ist. Die Profilierung der Hobelsohle 8a, die im Ausführungsbeispiel nicht im einzelnen gezeigt ist, weist den Vorteil auf, daß der Handhobel 1 beispielsweise an einem bereits zum Teil mit einer Profilnut versehenen Werkstück durch die entsprechend profilierte Hobelsohle 8a des Zuführtisches geführt werden kann, so daß zur weiteren Bearbeitung einer bereits teilweise vorgefertigten Profilnut auch eine exakte Führung in der Profilierung durch die Hobelsohle 8a der Zuführplatte 8 erfolgen kann, die eine exakte Weiter- oder Endbearbeitung der teilweise fertiggestellten Profilnut erlaubt.

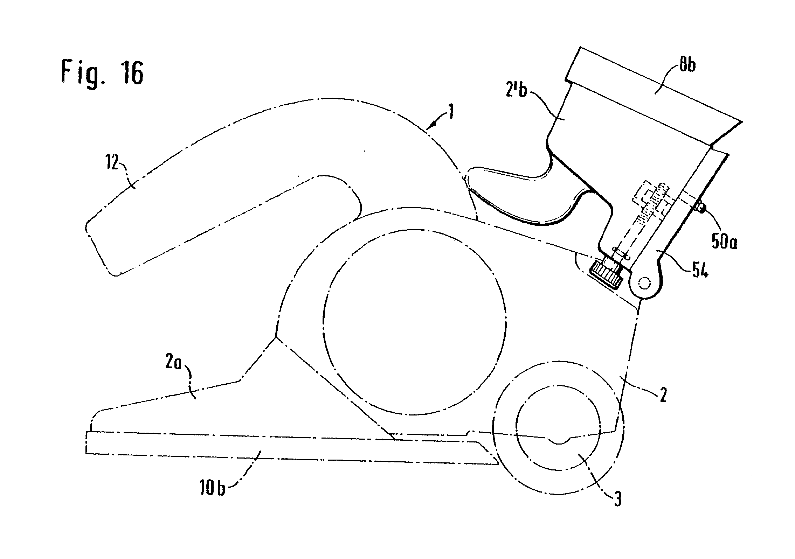

Das Gehäusevorderteil 2b ist im Ausführungsbeispiel um die Achse 53 im Gegenuhrzeigersinn hochschwenkbar bis in die Endlage 2b', die in Fig. 16 gezeigt ist. In dieser in der Fig. 16 gezeigten Lage läßt sich die Platte 8b sehr leicht vom vorderen Gehäuseteil 2b entfernen, auch wenn der Handhobel 1 selbst beispielsweise stationär angebracht sein sollte. Die hochschwenkbare Ausbildung des Gehäusevorderteiles 2b ermöglicht ein schnelles und einfaches Auswechseln der Hobelsohle 8a dadurch, daß die gesamte Platte 8b entfernt und durch eine andere ersetzt wird.

Wie aus den Fig. 14 und 16 ferner hervorgeht, ist die Hochschwenkbarkeit des Gehäuseteils 2b dadurch erreicht, daß über einen Raststift 50a ähnlich den vorher erwähnten Raststiften diese Platte 54 fest an dem mittleren Gehäuseteil 2 gehalten wird. Die Platte 54 ist in nicht näher dargestellter Weise mit Führungseinrichtungen, beispielsweise in der Art von Schwalbenschwänzen versehen, die es ermöglichen, den Gehäusevorderteil 2b nach Betätigung der Rändelmutter 55 mit Hilfe einer Schraubspindel 56 gegenüber der Platte 54 zu verstellen, so daß eine Höheneinstellung und damit eine Anpassung der Hobelsohle 8a und ihrer Hinterkante 7 an den Hobelkopf 3 möglich ist. Im hochgeschwenkten Zustand gemäß Fig. 16 bietet der neue Hobel auch den Vorteil, daß konkave Innenkonturen bearbeitet werden können. Das hintere Gehäuseteil 2a kann ebenfalls noch abgenommen werden, so daß auch relativ enge konkave Konturen mit Profilierungen versehen werden können, wobei das Gehäuse 2 des Handhobels 1 zweckmäßig ortsfest gehalten wird, wie das an sich bekannt ist.

## Patentansprüche

1. Handhobelgerät mit einer elektromotorisch getriebenen Antriebswelle für einen mit Messern bestückten Hobelkopf (3) o. dgl., der in einem im Gehäuse (2) vorgesehenen und nach unten offenen zylindrischen Hobelraum (4) umläuft, dessen Öffnung quer zur Vorschubrichtung durch die hintere Kante (7) einer in der Höhe verstellbaren Zuführplatte (8) bzw. durch die Vorderkante (9) einer mit einer Abgabeplatte (10) versehenen Auflageführung begrenzt ist und dessen Achse (4a) in einer bestimmten Lage zu der Hobelsohle (10a) der Abgabeplatte angeordnet ist, dadurch gekennzeichnet, daß der Durchmesser des Hobelraumes (4) so groß ist, daß wahlweise ein Hobelkopf zur Flächenbearbeitung oder ein Hobelkopf zur Profilbearbeitung mit deutlich unterschiedlichem Flugkreisdurchmesser (15 bzw. 14) einsetzbar ist, daß die Sohle (10a) der Abgabeplatte in einer Ebene verläuft, welche im Bereich der Öffnung des Hobelraumes den kleinsten Flugkreisdurchmesser (15) tangiert und daß Einrichtungen (32, 33, 34, 35, 36, 39, 8b, 10b) vorgesehen sind, um je nach der erzeugten Profilkontur mindestens in zwei quer zur Vorschubrichtung zueinander versetzten und in Vorschubrichtung hinter dem Hobelraum (4) liegenden Bereichen eine Anpassung der Auflageführung an die Profiltiefe (h) zu erreichen.

2. Handhobelgerät nach Anspruch 1, dadurch gekennzeichnet, daß die Zuführplatte (8) und die Abgabeplatte (10) in Vorschubrichtung (6) verstellbar sind und daß die Zuführplatte (8) im Bereich der Kante (7) und die Abgabeplatte (10) im Bereich ihrer Vorderkante (9) je mit einem auswechselbaren Kantenteil (7b bzw. 9a) versehen sind, dessen Kontur an den Flugkreis (14) des auszuführenden Profils angepaßt ist.

3. Handhobelgerät nach Anspruch 2, dadurch gekennzeichnet, daß die auswechselbaren Kantenteile (7b bzw. 9a) aus einem vom Hobelmesser zerspanbaren Material bestehen.

4. Handhobelgerät nach Anspruch 1, dadurch gekennzeichnet, daß die Abgabeplatte (10) mit den Einrichtungen zur teilweisen Anpassung an die Tiefe (h) des erzeugten Profils (27) versehen ist.

5. Handhobelgerät nach Anspruch 4, dadurch gekennzeichnet, daß die Einrichtungen aus Vertiefungen (30) an der Hobelsohle (10a) bestehen, in die mindestens an Teile der Profiltiefe (h) angepaßte Formstücke (32, 33, 36, 39) einsetzbar sind.

6. Handhobelgerät nach Anspruch 5, dadurch gekennzeichnet, daß die Vertiefungen als in Vorschubrichtung (6) verlaufende Längsnuten (30) mit Schwalbenschwanz- oder T-Profil ausgebildet sind, in die Abstützprofile (32, 33, 36, 39) einschiebbar oder einsetzbar sind.

7. Handhobelgerät nach Anspruch 6, dadurch gekennzeichnet, daß die Abstützprofile als Leisten (32, 33) ausgebildet sind, deren Höhe einer Profiltiefe (h) entspricht.

8. Handhobelgerät nach Anspruch 6, dadurch gekennzeichnet, daß die Abstützprofile als quer zur Vorschubrichtung (6) verlaufende Teilstücke (36) mit der Negativkontur (37) des herzustellenden Profils (27) ausgebildet und in die Längsnuten (30) eingeklipst sind.

9. Handhobelgerät nach Anspruch 8, dadurch gekennzeichnet, daß die Teilstücke als in der Länge den Abmessungen der Hobelsohle (10a) entsprechende Platten (39) ausgebildet sind.

10. Handhobelgerät nach einem oder mehreren der Ansprüche 1 bis 9, dadurch gekennzeichnet, daß die Unterseite des Gehäuses (2) im Bereich seitlich der Hobelsohle (10a) mit Längsnuten (31) zum Einsetzen von Queranschlägen (45) und/oder Abstützprofilen (32) versehen sind.

11. Handhobelgerät nach Anspruch 4, dadurch gekennzeichnet, daß die Einrichtungen aus Verstellstiften (34, 35) bestehen, die senkrecht von der Hobelsohle (10a) abstehen.

12. Handhobelgerät nach Anspruch 11, dadurch gekennzeichnet, daß die Verstellstifte als Gewindestifte (34, 35) ausgebildet sind.

13. Handhobelgerät nach Anspruch 1, dadurch gekennzeichnet, daß auch die Zuführplatte (8) so ausgebildet ist, daß ihre Hobelsohle (8a) an die vom Hobelkopf (3) erzeugbaren Profiltiefen (14, 15) anpaßbar ist.

14. Handhobelgerät nach Anspruch 13, bei dem Abstützprofile mit der Negativ-Kontur des herzustellenden Profils zur Anpassung an die Profiltiefen vorgesehen sind, die als in der Länge den Abmessungen der Hobelsohle entsprechende und auswechselbare Platten ausgebildet sind, dadurch gekennzeichnet, daß die Platten (8b, 10b) die Zuführplatte (8) bzw. die Abgabeplatte (10) bilden und am Gehäuse (2b, 2a) anbringbar sind.

15. Handhobelgerät nach Anspruch 14, dadurch gekennzeichnet, daß die Platten (8b, 10b) über Rastbefestigungen (50, 51) am Gehäuse (2a, 2b) anbringbar sind.

16. Handhobelgerät nach einem der Ansprüche 13 bis 15, dadurch gekennzeichnet, daß die Zuführplatte (8) an einem hochschwenkbaren Gehäusevorderteil (26) angebracht ist.

17. Handhobelgerät nach Anspruch 16, dadurch gekennzeichnet, daß das Gehäuseteil (2b) verschiebbar an einer Platte (54) angebracht ist, die um eine Schwenkachse (53) nach oben schwenkbar ist und in der Betriebsstellung über eine Rastbefestigung (50a) am mittleren Gehäuseteil (2) befestigt ist.

18. Handhobelgerät nach Anspruch 13, dadurch gekennzeichnet, daß ein hinteres Gehäuseteil (2a) verstellbar an einer schrägen Ebene (2c) eines mittleren Gehäuseteils (2) geführt ist und daß es aus dieser Führung herausbewegbar und abnehmbar ist.

19. Handhobelgerät nach Anspruch 1 oder 2, dadurch gekennzeichnet, daß der Abgabeplatte (10) und der Zuführplatte (8) formschlüssig am Gehäuse (2) des Handhobels (1) geführt und über Verstellspindeln (18 bzw. 24) in Vorschubrichtung (6) verschiebbar sind.

## Claims

1. Hand plane with, driven by an electric motor, a drive shaft for a plane head (3) or the like fitted with knives, and revolving in a cylindrical plane space (4) which is provided in the housing (2) and is open at the bottom, the opening being bounded transversely to the direction of feed by the rear edge (7) of an adjustable-height feeder plate (8) or by the leading edge (9) of a support guide provided with a discharge plate (10) and of which the axis (4a) is disposed in a definite location in relation to the plane sole (10a), characterized in that the diameter of the plane space (4) is sufficiently large that optionally a plane head for surface machining or a plane head for profile machining, of clearly different cutting circle diameters (15 or 14) can be used, and in that the sole (10a) of the discharge plate extends in a plane which, in the region of the aperture of the plane space, is tangent on the smallest cutting circle diameter (15) and in that means (32, 33, 34, 35, 36, 39, 8b, 10b) are provided in order, according to the profile contour produced, to adapt the support guidance to the profile depth (h) at least in two areas offset in relation to each other transversely to the direction of feed and after the plane space (4) in relation to the direction of feed.

2. Hand plane according to Claim 1, characterized in that the feeder plate (8) and the discharge plate (10) are adjustable in the feed direction (6) and in that the feeder plate (8) in the region of the edge (7) and the discharge plate (10) in the region of its leading edge (9) are each provided with an interchangeable edge part (7b or 9a), the contour of which is adapted to the cutting circle (14) of the profile to be executed.

3. Hand plane according to Claim 2, characterized in that the interchangeable edge parts (7a or 9a) consist of a material which can be machined by the plane knife.

4. Hand plane according to Claim 1, characterized in that the discharge plate (10) is provided with the means of partial adaptation to the depth (h) of the profile (27) produced.

5. Hand plane according to Claim 4, characterized in that the means consist of depressions (30) in the plane sole (10a), into which it is possible to insert shaped members (32, 33, 36, 39) adapted at least to parts of the profile depth (h).

6. Hand plane according to Claim 5, characterized in that the depressions are constructed as — extending in the feed direction (6) — longitudinal grooves of dovetailed or T-shaped cross-section into which it is possible to push or insert supporting profiles (32, 33, 36, 39).

7. Hand plane according to Claim 6, characterized in that the supporting profiles are constructed as strips (32, 33) the height of which corresponds to a profile depth (h).

8. Hand plane according to Claim 6, characterized in that the supporting profiles are constructed as parts (36) extending transversely to the feed direction (6) with the negative contour (37) of the profile (27) which is to be produced, and clipped into the longitudinal grooves (30).

9. Hand plane according to Claim 8, characterized in that the parts are constructed as plates (39) corresponding in length to the dimensions of the plane sole (10a).

10. Hand plane according to one or more of Claims 1 to 9, characterized in that the underside of the housing (2) is, in the area to the side of the plane sole (10a) with longitudinal grooves (31) for the insertion of transverse abutments (45) and/on supporting profiles (32).

11. Hand plane according to Claim 4, characterized in that the means consist of adjusting pins (34, 35) which stand out at a rightangle to and from the plane sole (10a).

12. Hand plane according to Claim 11, characterized in that the adjusting pins and constructed as screwthreaded pins (34, 35).

13. Hand plane according to Claim 1, characterized in that also the feeder plate (8) is so constructed that its plane sole (8a) is adaptable to the profile depths (14, 15) which can be generated by the plane head (3).

14. Hand plane according to Claim 13, in which supporting profiles with the negative contour of the profile which is to be produced are provided for adaptation to the profile depths and are constructed as interchangeable plates corresponding in length to the dimensions of the plane sole, characterized in that the plates (8b, 10b) form the feeder plate (8) or discharge plate (10) and can be mounted on the housing (2b, 2a).

15. Hand plane according to Claim 14, characterized in that the plates (8b, 10b) can be attached to the housing (2a, 10b) by ratchet fixings (50, 51).

16. Hand plane according to one of Claims 13 to 15, characterized in that the feeder plate (8) is mounted on an upwardly pivotable housing front part (2b).

17. Hand plane according to Claim 16, characterized in that the housing part (2b) is displaceably mounted on a plate (54) which is upwardly pivotable about a pivoting axis (53) and which, in the operating position, is fixed on the middle housing part (2) via a ratchet fixing (50a).

18. Hand plane according to Claim 13, characterized in that a rear housing part (2a) is adjustably guided on an oblique plane (2c) of a middle housing part (2) and in that it can be moved out of and is removable from this guide.

19. Hand plane according to Claim 1 or 2, characterized in that the discharge plate (10) and the feeder plate (8) are form-lockingly guided on the housing (2) of the hand plane (1) and are *via* adjustment spindles (18 or 24) displaceable in the feed direction (6).

## Revendications

1. Rabot à main comportant un arbre d'entraînement électromotorisé pour une tête de rabotage (3) ou analogue qui est garnie de couteaux et qui tourne dans une chambre cylindrique de rabotage (4) prévue dans le carter (2), ouverte vers le bas, dont l'ouverture est limitée, dans la direction transversale à la direction d'avance, par l'arête arrière (7) d'une plaque d'entrée (8) réglable en hauteur et par l'arête avant (9) d'un guidage d'appui muni d'une plaque de dégagement et dont l'axe (4a) est disposé en une position déterminée par rapport à la semelle (10a) de la plaque de dégagement, caractérisé en ce que le diamètre de la chambre de rabotage (4) est suffisamment grand pour que l'on puisse utiliser au choix une tête de rabotage pour l'usinage plan ou une tête de rabotage pour l'usinage au profil, avec un diamètre du cercle enveloppe (15 ou 14) nettement différent ; en ce que la semelle (10a) de la plaque de dégagement se trouve dans un plan qui, dans la zone de l'ouverture de la chambre de rabotage, est tangent au plus petit diamètre (15) du cercle enveloppe ; et en ce qu'il est prévu des dispositifs (32, 33, 34, 35, 36, 39, 8b, 10b) pour, selon chaque fois le contour profilé produit, obtenir, au moins dans deux zones décalées l'une par rapport à l'autre transversalement à la direction d'avance et situées derrière la chambre de rabotage (4) dans le sens d'avancement, une adaptation du guidage d'appui à la profondeur du profil (h).

2. Rabot à main selon la revendication 1, caractérisé en ce que la plaque d'entrée (8) et la plaque de dégagement (10) sont réglables selon la direction d'avance (6) ; et en ce que la plaque d'entrée (8), dans la zone de l'arête (7) et la plaque de dégagement (10), dans la zone de son arête avant (9), comportent respectivement une pièce d'arête (7b et 9a) que l'on peut échanger et dont le contour s'adapte au cercle enveloppe (14) du profil à obtenir.

3. Rabot à main selon la revendication 2, caractérisé en ce que les pièces d'arête (7b et 9a) que l'on peut échanger sont constituées d'un matériau que le couteau du rabot peut usiner.

4. Rabot à main selon la revendication 1, caractérisé en ce que la plaque de dégagement (10) comporte des dispositifs permettant son adaptation partielle à la profondeur (h) du profil produit (27).

5. Rabot à main selon la revendication 4, caractérisé en ce que les dispositifs consistent en évidements (30) dans la semelle du rabot (10a) dans lesquels on peut insérer des pièces de forme (32, 33, 36, 39) adaptées à au moins des parties de la profondeur du profil (h).

6. Rabot à main selon la revendication 5, caractérisé en ce que les évidements ont la forme de rainures longitudinales (30) à profil en queue d'aronde ou en T qui courent dans la direction d'avance (6) et dans lesquelles on peut faire coulisser ou insérer des profilés d'appui (32, 33, 36, 39).

7. Rabot à main selon la revendication 6, caractérisé en ce que les profilés d'appui sont conçus sous forme de baguettes (32, 33) dont la hauteur correspond à une profondeur du profil (h).

8. Rabot à main selon la revendication 6, caractérisé en ce que les profilés d'appui sont conçus sous forme de pièces partielles (36) qui courent transversalement par rapport à la direction d'avance (6) et présentent le contour négatif (37) du profil à obtenir (27) ; et en ce que les profilés d'appui se clipsent dans les rainures longitudinales (30).

9. Rabot à main selon la revendication 8, caractérisé en ce que les pièces partielles sont conçues sous forme de plaques (39) dont la longueur correspond aux dimensions de la semelle du rabot (10a).

10. Rabot à main selon une ou plusieurs des revendications 1 à 9, caractérisé en ce que la face inférieure du carter (2) comporte, dans la zone située sur le côté de la semelle du rabot (10a), des rainures longitudinales (31) pour y insérer des butées transversales (45) et/ou des profilés d'appui (32).

11. Rabot à main selon la revendication 4, caractérisé en ce que les dispositifs sont constitués de tiges de réglage (34, 35) qui se détachent perpendiculairement depuis la semelle du rabot (10a).

12. Rabot à main selon la revendication 11, caractérisé en ce que les tiges de réglage sont conçues sous forme de vis sans tête (34, 35).

13. Rabot à main selon la revendication 1, caractérisé en ce que la plaque d'entrée (8) est également conçue de façon que sa semelle (8a) puisse s'adapter aux profondeurs de profil (14, 15) que doit produire la tête de rabotage (3).

14. Rabot à main selon la revendication 13, dans lequel sont prévus des profilés d'appui qui présentent le contour négatif du profil à obtenir, pour adaptation aux profondeurs du profil, et qui sont conçus sous forme de plaques dont la longueur correspond aux dimensions de la semelle du rabot et que l'on peut échanger, caractérisé en ce que les plaques (8b, 10b) forment la plaque d'entrée (8) ou la plaque de dégagement (10) et peuvent être rapportées sur le carter (2b, 2a).

15. Rabot à main selon la revendication 14, caractérisé en ce que les plaques (8b, 10b) peuvent être rapportées sur le carter (2a, 2b) au moyen de fixations par crantage (50, 51).

16. Rabot à main selon l'une des revendications 13 à 15, caractérisé en ce que la plaque d'entrée (8) est rapportée sur une partie avant (2b) du carter qui peut pivoter vers le haut.

17. Rabot à main selon la revendication 16, caractérisé en ce que la partie de carter (2b) est rapportée avec possibilité de coulissement sur une plaque (54) qui peut pivoter vers le haut autour d'un axe de pivotement (53) et qui, en position de service, est fixée, par l'intermédiaire d'une fixation de crantage (50a), à la partie médiane du carter (2).

18. Rabot à main selon la revendication 13, caractérisé en ce qu'une partie arrière de carter (2a) est guidée avec possibilité de réglage contre un plan incliné (2c) d'une partie médiane de carter (2) ; et en ce que l'on peut la faire sortir de ce guidage et l'enlever.

19. Rabot à main selon la revendication 1 ou 2, caractérisé en ce que la plaque de dégagement (10) et la plaque d'entrée (8) sont guidées, de par la forme, contre le carter (2) du rabot (1) et peuvent coulisser dans la direction d'avance (6) par l'intermédiaire de tiges filetées de réglage (18 ou 24).

Fig. 1

Fig. 2   Fig. 3

Fig. 5a   Fig. 5b

Fig. 4

Fig. 6

**Fig. 7**

38
31
h
37 30 30 38 10 36 10a

**Fig. 8**

36
38 38 38

**Fig. 9**

2 31 43 44
42
10 30 30 10a
42

**Fig. 10**

2 31
31
10 30 30 10a
45
42
46

Fig. 11

XII

20  2  10

40  39  40

XII

Fig. 13

39  40

40  40

Fig. 12

40

39  41

0 126 285

Fig. 14

0 126 285

Fig. 15

Fig. 16

0 126 285